(19)

Europäisches
Patentamt
European
Patent Office
Office européen
des brevets

(11) **EP 4 130 594 A1**

(12) **EUROPEAN PATENT APPLICATION**
published in accordance with Art. 153(4) EPC

(43) Date of publication:
**08.02.2023 Bulletin 2023/06**

(21) Application number: **21902185.4**

(22) Date of filing: **30.09.2021**

(51) International Patent Classification (IPC):
*F24F 11/46* (2018.01)     *F24F 11/64* (2018.01)
*F24F 11/77* (2018.01)     *F24F 11/80* (2018.01)
*F24F 11/88* (2018.01)     *F24F 11/30* (2018.01)
*F24F 11/65* (2018.01)     *F24F 11/74* (2018.01)
*F24F 11/83* (2018.01)     *F24F 110/10* (2018.01)

(52) Cooperative Patent Classification (CPC):
**F24F 11/30; F24F 11/46; F24F 11/64; F24F 11/65;**
**F24F 11/74; F24F 11/77; F24F 11/80; F24F 11/83;**
**F24F 11/88;** F24F 2110/10

(86) International application number:
**PCT/CN2021/122364**

(87) International publication number:
**WO 2022/121477 (16.06.2022 Gazette 2022/24)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **08.12.2020   CN 202011445825**
**08.12.2020   CN 202011443905**

(71) Applicants:
• **GD Midea Heating & Ventilating Equipment Co.,**
**Ltd.**
**Foshan, Guangdong 528311 (CN)**
• **Midea Group Co., Ltd.**
**Foshan, Guangdong 528311 (CN)**

(72) Inventors:
• **ZHENG, Chunyuan**
**Foshan, Guangdong 528311 (CN)**

• **LUO, Bin**
**Foshan, Guangdong 528311 (CN)**
• **DING, Yunxiao**
**Foshan, Guangdong 528311 (CN)**
• **LI, Dongdong**
**Foshan, Guangdong 528311 (CN)**
• **GUO, Fangcheng**
**Foshan, Guangdong 528311 (CN)**
• **LI, Bin**
**Foshan, Guangdong 528311 (CN)**
• **WU, Jintong**
**Foshan, Guangdong 528311 (CN)**

(74) Representative: **Whitlock, Holly Elizabeth Ann et al**
**Maucher Jenkins**
**Seventh Floor Offices**
**Artillery House**
**11-19 Artillery Row**
**London SW1P 1RT (GB)**

(54) **TEMPERATURE ADJUSTMENT DEVICE, CONTROL METHOD THEREFOR, CONTROL**
**APPARATUS THEREOF, AND STORAGE MEDIUM**

(57)     Disclosed are a temperature adjustment device, a control method therefor, a control apparatus thereof, and a storage medium. The method comprises: acquiring a current demand load of a co-cooling and co-heating area of the temperature adjustment device; acquiring current operating parameters of the temperature adjustment device; according to the current operating parameters and demand load, determining target operating parameters of the temperature adjustment device; and according to the target operating parameters, adjusting an operating state of the temperature adjustment device. In the method, the operating state of the temperature adjustment device is adjusted according to the current demand load and operating parameters of the co-cooling and co-heating area, which detects the load demands of the co-cooling and co-heating area, and controls the temperature adjustment device according to the detected load demands. Thus, the number of times the temperature adjustment device starts and stops may be reduced, which prevents frequent starting and stopping, and ena-

**(Cont. next page)**

bles the temperature adjustment device to operate in an energy-saving manner.

acquiring a current demand load of a co-cooling/co-heating area where the temperature conditioning apparatus is located — S101

↓

acquiring a current operating parameter of the temperature conditioning apparatus — S102

↓

determining a target operating parameter of the temperature conditioning apparatus according to the current operating parameter and the current demand load — S103

↓

adjusting an operating status of the temperature conditioning apparatus according to the target operating parameter — S104

Figure 1

**Description**

**CROSS-REFERENCE TO RELATED APPLICATION**

This application claims priority to and benefit of the Chinese Patent Application No. "202011445825.6" submitted by GD MIDEA HEATING & VENTILATING EQUIPMENT CO., LTD. and MIDEA GROUP CO., LTD. with the title of "TEMPERATURE ADJUSTMENT DEVICE, CONTROL METHOD THEREFOR, CONTROL APPARATUS THEREOF, AND STORAGE MEDIUM" filed on December 08, 2020; and the Chinese Patent Application No. "202011443905.8" submitted by GD MIDEA HEATING & VENTILATING EQUIPMENT CO., LTD. and MIDEA GROUP CO., LTD. with the title of "TEMPERATURE ADJUSTMENT DEVICE, CONTROL METHOD THEREFOR, CONTROL APPARATUS THEREOF, AND STORAGE MEDIUM" filed on December 08, 2020.

**FIELD**

The present disclosure relates to the technical field of temperature control, specifically to a temperature conditioning apparatus and a control method and control device therefor and a storage medium.

**BACKGROUND**

At present, many temperature conditioning apparatuses achieve an operation with variable frequency output. According to statistics, the temperature conditioning apparatus, especially an air conditioner, generally starts and stops frequently due to a mismatch between the output and a load for a building, where a ratio of a shutdown more than once per hour accounts for more than half therebetween. A frequent start-stop leads to higher energy consumption by the apparatus, thereby resulting in an energy loss.

**SUMMARY**

The present disclosure aims to solve at least one of the technical problems in the related art to a certain degree.
For this, a first object of the present disclosure is to provide a method for controlling a temperature conditioning apparatus. The method adjusts an operating status of the temperature conditioning apparatus according to a current demand load of a co-cooling/co-heating area and an operating parameter, realizing a detection for the demand load of the co-cooling/co-heating area, and a control for the temperature conditioning apparatus according to the detected demand load, thus reducing the number of start-stops of the temperature conditioning apparatus and avoiding a frequent start-stop, thereby making the temperature conditioning apparatus operate in energy saving.
A second object of the present disclosure is to provide a device for controlling a temperature conditioning apparatus.
A third object of the present disclosure is to provide a computer-readable storage medium.
A fourth object of the present disclosure is to provide a temperature conditioning apparatus.
For the above objects, in a first aspect, the present disclosure provides in embodiments a method for controlling a temperature conditioning apparatus, including: acquiring a current demand load of a co-cooling/co-heating area where the temperature conditioning apparatus is located; acquiring a current operating parameter of the temperature conditioning apparatus; determining a target operating parameter of the temperature conditioning apparatus according to the current operating parameter and the current demand load; and adjusting an operating status of the temperature conditioning apparatus according to the target operating parameter.
For the above objects, in a second aspect, the present disclosure provides in embodiments a device for controlling a temperature conditioning apparatus, including: a first acquiring module, configured to acquire a current demand load of a co-cooling/co-heating area where the temperature conditioning apparatus is located; a second acquiring module, configured to acquire a current operating parameter of the temperature conditioning apparatus; a first determining module, configured to determine a target operating parameter of the temperature conditioning apparatus according to the current operating parameter and the current demand load; and a first adjusting module, configured to adjust an operating status of the temperature conditioning apparatus according to the target operating parameter.
For the above objects, in a third aspect, the present disclosure provides in embodiments a computer-readable storage medium having stored therein a computer program that, when executed by a processor, achieves a method for controlling a temperature conditioning apparatus according to the embodiments of the present disclosure in the first aspect.
For the above objects, in a fourth aspect, the present disclosure provides in embodiments a temperature conditioning apparatus, including a device for controlling a temperature conditioning apparatus according to the above embodiments of the present disclosure.

According to the technical solutions of the embodiments of the present disclosure, a current demand load of a co-cooling/co-heating area where a temperature conditioning apparatus is located is acquired; a current operating parameter of the temperature conditioning apparatus is acquired; a target operating parameter of the temperature conditioning apparatus is determined according to the current operating parameter and the current demand load; and an operating status of the temperature conditioning apparatus is adjusted according to the target operating parameter. Accordingly, the operating status of the temperature conditioning apparatus is adjusted according to the current demand load of the co-cooling/co-heating area and the operating parameter, realizing a detection for the demand load of the co-cooling/co-heating area and a control for the temperature conditioning apparatus according to the detected demand load, thus reducing the number of the start-stops of the temperature conditioning apparatus and avoiding a frequent start-stop, thereby making the temperature conditioning apparatus operate in energy saving.

## BRIEF DESCRIPTION OF THE DRAWINGS

Figure 1 is a flow chart showing a method for controlling a temperature conditioning apparatus according to embodiments of the present disclosure;
Figure 2 is a flow chart showing an acquisition for a current demand load according to embodiments of the present disclosure;
Figure 3 is a flow chart showing an acquisition for a current demand load at a startup moment according to examples of the present disclosure;
Figure 4 is a flow chart showing a determination of a target operating parameter of a temperature conditioning apparatus according to embodiments of the present disclosure;
Figure 5 is a flow chart showing a determination of a target operating parameter of a temperature conditioning apparatus based on a matched-degree according to examples of the present disclosure;
Figure 6 is a flow chart showing an adjustment for an operating status of a temperature conditioning apparatus according to embodiments of the present disclosure;
Figure 7 is a flow chart showing a determination of an operating parameter of an outdoor unit according to an example of the present disclosure;
Figure 8 is a flow chart showing a determination of an operating parameter of an outdoor unit according to another example of the present disclosure;
Figure 9 is a schematic diagram showing a temperature conditioning apparatus according to examples of the present disclosure;
Figure 10 is a block diagram showing a device for controlling a temperature conditioning apparatus according to embodiments of the present disclosure;
Figure 11 is a block diagram showing a temperature conditioning apparatus according to embodiments of the present disclosure.

## DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are illustrative, and used to generally understand the present disclosure. The embodiments shall not be construed to limit the present disclosure.

At present, lots of temperature conditioning apparatuses such as an air conditioner achieves an operation with variable frequency output. According to statistics, the air conditioner generally starts and stops frequently due to a mismatch between a system output and a load for a building, where a ratio of a shutdown more than once per hour accounts for more than half therebetween. A frequent start-stop leads to higher energy consumption by the apparatus. In addition, an excessive output of the air conditioner is caused by an excessively high condensing temperature under a heating state or an excessively low evaporating temperature under a cooling state, at which the system does not operate at an optimal energy efficiency point based on meeting the load. Thus, the current temperature conditioning apparatus still fails to utilize the capability of a frequency conversion apparatus to achieve a more efficient operation.

The inventor found that, a main problem to be solved for the above is to acquire a demand load for a building and how to control the system to realize a high-efficient operation that matches the load, after the load is acquired. In the related art, a demand energy of indoors is generally calculated, with a temperature difference between an intaking air temperature and a current set temperature, but this temperature difference does not reflect a load when the indoors reaches the set temperature; or with a load simulation through a complex simulation. These methods, on the one hand, cannot detect the load for the building in real time, and are also difficult to apply in practical engineering for the hard calculation and model building, on the other hand.

Thus, it is not realized in the related art to trace the demand load for a building in real time, and then to control the temperature conditioning apparatus according to the real-time traced load, to make the temperature conditioning apparatus operate at the optimal energy efficiency.

For this, the present disclosure provides in examples a method for controlling a temperature conditioning apparatus, which realizes a detection for the demand load of the co-cooling/co-heating area, and controls the temperature conditioning apparatus according to the detected demand load, thus avoiding a frequent start-stop of the temperature conditioning apparatus, thereby benefiting the temperature conditioning apparatus to operate at the optimal energy efficiency.

The temperature conditioning apparatus and the control method and control device therefor and the storage medium in examples of the present disclosure are described below with reference to the drawings.

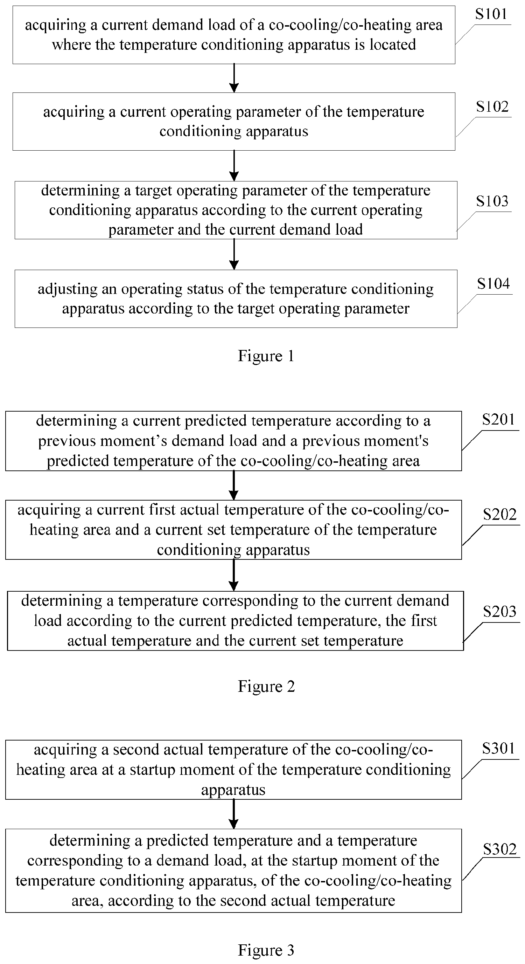

Figure 1 is a flow chart showing a method for controlling a temperature conditioning apparatus according to examples of the present disclosure.

As shown in Figure 1, the method includes the following steps S101-S104.

At S 101, a current demand load of a co-cooling/co-heating area where a temperature conditioning apparatus is located is acquired.

The co-cooling/co-heating area refers to an area where the temperature conditioning apparatus is located that requires cooling and/or heating. The current demand load refers to a load which is required currently, i.e. a target load.

Specifically, when operating, the temperature conditioning apparatus may detect the demand load of the co-cooling/co-heating area in real time, thus realizing a real-time trace for the demand load.

At S102, a current operating parameter of the temperature conditioning apparatus is acquired.

The current operating parameter is a parameter indicating an actual operating status of the temperature conditioning apparatus, such as a current environment temperature, a temperature of a heat exchanger, a rotate speed of an indoor fan and the like.

Specifically, when operating, the temperature conditioning apparatus may detect the current operating parameter of the temperature conditioning apparatus in real time, or may detect the current operating parameter of the temperature conditioning apparatus while detecting the demand load in real time, thus realizing a real-time trace for the operating parameter.

At S103, a target operating parameter of the temperature conditioning apparatus is determined according to the current operating parameter and the current demand load.

Specifically, with acquisitions of the current demand load of the co-cooling/co-heating area and the current operating parameter of the temperature conditioning apparatus, the target operating parameter of the temperature conditioning apparatus is determined according to the current operating parameter and the current demand load, such as a target temperature of the heat exchanger, a target rotate speed of the indoor fan and the like.

At S104, an operating status of the temperature conditioning apparatus is adjusted according to the target operating parameter.

Specifically, with a determination of the target operating parameter of the temperature conditioning apparatus, the operating status of the temperature conditioning apparatus is adjusted to make an operating parameter of the temperature conditioning apparatus reach the target operating parameter, thus making the operating parameter of the temperature conditioning apparatus match the demand load of the co-cooling/co-heating area at the current moment, and avoiding the temperature conditioning apparatus from a frequent start-stop due to a mismatch between the operating parameter and the demand load, thereby benefiting the temperature conditioning apparatus to operate at the optimal energy efficiency based on the current demand load.

Accordingly, the method adjusts the operating status of the temperature conditioning apparatus according to the current demand load of the co-cooling/co-heating area and the operating parameter, realizing a detection for the demand load of the co-cooling/co-heating area, and a control for the temperature conditioning apparatus according to the detected demand load, thus reducing the number of the start-stops of the temperature conditioning apparatus and avoiding a frequent start-stop, thereby making the temperature conditioning apparatus operate in energy saving.

It should be noted that in the above step S101, for improving the reliability of acquiring the demand load, the current demand load may be acquired with a previous status parameter and a current status parameter. For example, the current demand load may be acquired according to a previous operating parameter of the temperature conditioning apparatus, a previous demand load of the co-cooling/co-heating area, a current set temperature of the temperature conditioning apparatus and a current actual temperature of the co-cooling/co-heating area. For improving the reliability of acquiring the demand load further, the previous demand load may be a previous moment's demand load during the demand load is acquired.

In an example of the present disclosure, as shown in Figure 2, the above step S101 may include the following steps S201-S203.

At S201, a current predicted temperature is determined according to a previous moment's demand load and a previous moment's predicted temperature of the co-cooling/co-heating area.

Specifically, the previous moment's demand load and the previous moment's predicted temperature of the co-cooling/co-heating area where the temperature conditioning apparatus is located may be acquired by calling the previous status parameter of the temperature conditioning apparatus, and the current predicted temperature is calculated according to the previous moment's demand load and the previous moment's predicted temperature.

A Formula (1) for calculating the current predicted temperature may be:

$$T_{s,ob}(n)= T_{s,ob}(n-1)\varepsilon+(1-\varepsilon)T_{load,r}(n-1) \qquad (1).$$

In the Formula (1), n represents a current moment; n-1 represents a previous moment; $T_{s,ob}(n)$ is a current predicted temperature; $T_{s,ob}(n-1)$ is a previous moment's predicted temperature of a co-cooling/co-heating area; $T_{load,r}(n-1)$ is a previous moment's demand load of the co-cooling/co-heating area; and $\varepsilon$ is a linear coefficient and a value range of $\varepsilon$ may be $0 < \varepsilon < 1$.

At the step S202, a current first actual temperature of the co-cooling/co-heating area and a current set temperature of the temperature conditioning apparatus are acquired.

Specifically, the current first actual temperature $T_1(n)$ of the co-cooling/co-heating area may be detected with a temperature sensor, and the current set temperature $T_{set}(n)$ of the temperature conditioning apparatus may be acquired by viewing a monitor of the temperature conditioning apparatus, where n represents the current moment.

It should be noted that, the temperature conditioning apparatus operates according to its set temperature $T_{set}(n)$, while influenced by other factors such as the environment temperature, the current first actual temperature of the co-cooling/co-heating area is $T_1(n)$, rather than $T_{set}(n)$.

At S203, a temperature corresponding to the current demand load is determined according to the current predicted temperature, the first actual temperature and the current set temperature.

Specifically, after the current predicted temperature $T_{s,ob}(n)$, the current first actual temperature $T_1(n)$ of the co-cooling/co-heating area and the current set temperature $T_{set}(n)$ of the temperature conditioning apparatus are acquired, the temperature corresponding to the current demand load may be determined according to $T_{s,ob}(n)$, $T_1(n)$ and $T_{set}(n)$, where a calculating Formula may be:

$$T_{load,r}(n)= a*T_{set}(n)+ b*T_{s,ob}(n)+c* T_1(n) \qquad (2).$$

In the Formula (2), $T_{load,r}(n)$ is the temperature corresponding to the current demand load, and a, b and c are pre-set known coefficients.

That is, in the case that the temperature conditioning apparatus has been operated at the previous moment, the temperature corresponding to the current demand load of the co-cooling/co-heating area is calculated according to the previous moment's demand load and the previous moment's predicted temperature of the co-cooling/co-heating area, and the current first actual temperature of the co-cooling/co-heating area and the current set temperature of the temperature conditioning apparatus, thereby ensuring the reliability of acquiring the temperature corresponding to the demand load.

As described above, in the case that the temperature conditioning apparatus has been operated at the previous moment, i.e. the temperature conditioning apparatus has been operated for a while, the temperature corresponding to the current demand load is acquired according to a previous moment's operating status parameter and a current moment's operating status parameter. It should be noted that, at an initial moment, i.e. at a startup moment of the temperature conditioning apparatus, it is also required to acquire a temperature corresponding to the demand load for a subsequent temperature adjustment. At this moment, the predicted temperature of the co-cooling/co-heating area and the temperature corresponding to the demand load are both equal to the actual temperature of the co-cooling/co-heating area, such as an actual indoor temperature. Based on this, at the startup moment of the temperature conditioning apparatus, the acquisition for the temperature corresponding to the demand load are performed as the following examples.

In an example, as shown in Figure 3, the method for controlling the temperature conditioning apparatus may further include the following steps S301-S302.

At S301, a second actual temperature of the co-cooling/co-heating area at the startup moment of the temperature conditioning apparatus is acquired.

Specifically, the temperature conditioning apparatus may be monitored for its open state in real time, and when the temperature conditioning apparatus is monitored to be started, the second actual temperature of the co-cooling/co-heating area may be acquired with the temperature sensor in time.

At S302, the predicted temperature and the temperature corresponding to the demand load, at the startup moment of the temperature conditioning apparatus, of the co-cooling/co-heating area, is determined according to the second actual temperature.

Specifically, after the second actual temperature of the co-cooling/co-heating area at the startup moment of the temperature conditioning apparatus is acquired, as at the startup moment, the predicted temperature of the co-cooling/co-heating area and the temperature corresponding to the demand load are both equal to the second actual temperature, the predicted temperature of the co-cooling/co-heating area and the temperature corresponding to the demand load, at the startup moment, may be determined according to the second actual temperature, for a subsequent adjustment for the temperature conditioning apparatus.

That is, at the initial moment, the predicted temperature and the temperature corresponding to the demand load, at the startup moment, of the co-cooling/co-heating area, are determined by acquiring the actual temperature of the co-cooling/co-heating area, so as to adjust the temperature conditioning apparatus according to the temperature corresponding to the demand load.

Thus, the trace for the demand load are not only performed during the operation of the temperature conditioning apparatus, but also performed at the startup moment of the temperature conditioning apparatus, thus realizing the real-time trace for the demand load, and the status parameter of the temperature conditioning apparatus is adjusted according to the demand load, thus ensuring the reliability of the acquired demand load, and effectively avoiding the temperature conditioning apparatus from the frequent start-stop, thereby benefiting the temperature conditioning apparatus to operate at the optimal energy efficiency.

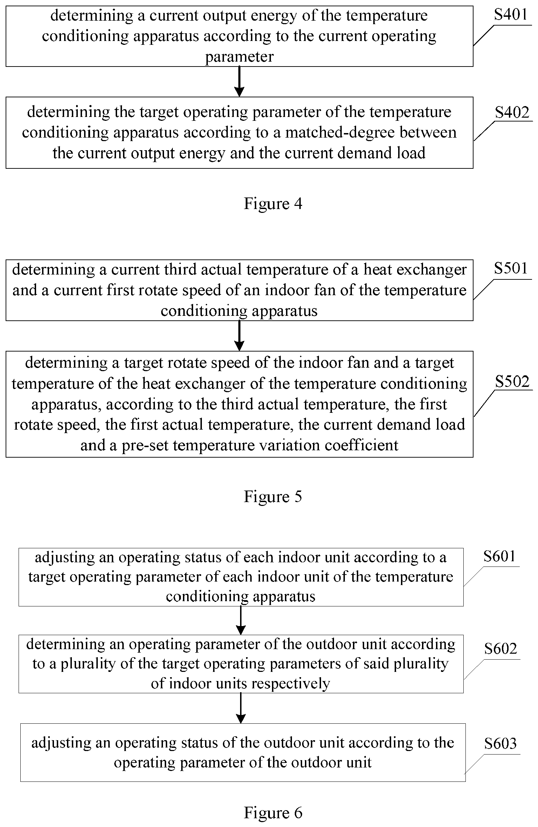

In an example, as shown in Figure 4, the above step S103 may include the following steps S401-S402.

At step S401, a current output energy of the temperature conditioning apparatus is determined according to the current operating parameter.

The current output energy refers to a temperature variation value caused by an energy input for the temperature conditioning apparatus.

At S402, the target operating parameter of the temperature conditioning apparatus is determined according to a matched-degree between the output energy and the demand load.

Specifically, after the current output energy of the temperature conditioning apparatus and the current demand load of the co-cooling/co-heating area are acquired, the temperature variation value caused by the energy input for the temperature conditioning apparatus may be matched to a temperature variation value corresponding to the demand load, to obtain the matched-degree between the two, and according to the matched-degree, to determine the target operating parameter of the temperature conditioning apparatus, thus making the current output energy of the temperature conditioning apparatus match the current demand load of the co-cooling/co-heating area, i.e. make them equal, thereby avoiding the temperature conditioning apparatus from the frequent start-stop due to the mismatch between the two.

In an example, as shown in Figure 5, the above step S402 may include the following steps S501-S502.

At S501, a current third actual temperature of a heat exchanger and a current first rotate speed of an indoor fan of the temperature conditioning apparatus are determined.

The current third actual temperature $Z(n)$ of the heat exchanger may be detected with the temperature sensor, and the current first rotate speed $vf(n)$ of the indoor fan may be detected with a speed sensor.

At S502, a target rotate speed of the indoor fan and a target temperature of the heat exchanger of the temperature conditioning apparatus are determined, according to the third actual temperature, the first rotate speed, the first actual temperature, the current demand load and a pre-set temperature variation coefficient.

Specifically, a current temperature variation coefficient $\alpha$ is calculated with the current third actual temperature $Z(n)$ and the current first rotate speed $vf(n)$, and then the temperature variation value caused by the energy input for the temperature conditioning apparatus is calculated with the first actual temperature $T_1(n)$, the third actual temperature $Z(n)$ and the current temperature variation coefficient $\alpha$; and the temperature variation value caused by the demand load is calculated with the first actual temperature $T_1(n)$, the temperature corresponding to the current demand load $T_{load,r}(n)$ and the pre-set temperature variation coefficient $\beta$, where $\beta$ is a constant.

The temperature variation value caused by the energy input is compared to the temperature variation value caused by the demand load, and according to the compared result, the target rotate speed $vf$ of the indoor fan and the target temperature $Z$ of the heat exchanger of the temperature conditioning apparatus are determined. The first rotate speed $vf(n)$ is adjusted according to the target rotate speed $vf$, to make the current rotate speed of the indoor fan reach the target rotate speed $vf$; and the third actual temperature $Z(n)$ is adjusted according to the target temperature $Z$ of the heat exchanger, to make the current temperature of the heat exchanger reach the target temperature $Z$.

Specifically, a corresponding adjustment according to the compared result of the temperature variation value caused by the energy input and the temperature variation value caused by the demand load is as follows.

Based on the temperature variation value caused by the energy input being higher than the temperature variation value caused by the demand load, the rotate speed $vf(n)$ of the indoor fan and the current third actual temperature $Z(n)$ of the heat exchanger are reduced, to make the current rotate speed of the indoor fan reach the target rotate speed $vf$ and make the current temperature of the heat exchanger reach the target temperature $Z$.

Based on the temperature variation value caused by the energy input being lower than the temperature variation value caused by the demand load, the rotate speed vf(n) of the indoor fan and the current third actual temperature Z(n) of the heat exchanger are increased, to make the current rotate speed of the indoor fan reach the target rotate speed vf and make the current temperature of the heat exchanger reach the target temperature Z.

Based on the temperature variation value caused by the energy input being equal to the temperature variation value caused by the demand load, the rotate speed vf(n) of the indoor fan and the current third actual temperature Z(n) of the heat exchanger are maintained.

With the above adjustments, the temperature variation value caused by the energy input matches the temperature variation value caused by the demand load, i.e. meeting a matching Formula as follows:

$$(T_1(n)- Z(n))(1-\alpha(Z,vf))-(T_1(n)-T_{load,r}(n)) *\beta=0 \qquad (3).$$

In Formula (3), $T_1(n)$ is the current first actual temperature of the co-cooling/co-heating area; $Z(n)$ is the current third actual temperature of the heat exchanger; $\alpha$ is the current temperature variation coefficient; $Z$ is the target temperature of the heat exchanger; vf is the target rotate speed of the indoor fan; $\beta$ is the pre-set temperature variation coefficient; and $T_{load,r}(n)$ is the temperature corresponding to the current demand load.

Thus, the indoor fan and the heat exchanger are adjusted according to the calculated target rotate speed required by the indoor fan and the calculated target temperature required by the heat exchanger, to make the indoor fan and the heat exchanger meet the required target values respectively, thus ensuring the temperature conditioning apparatus operating at the optimal energy efficiency thereby realizing an energy-saving operation.

It should be noted that, the control method in examples of the present disclosure is applicable not only to the temperature conditioning apparatus that includes one indoor unit and one outdoor unit, but also to the temperature conditioning apparatus that includes a plurality of indoor units and one outdoor unit, i.e. a variable refrigerant volume (VRV) system.

Based on the temperature conditioning apparatus including one indoor unit and one outdoor unit, after the target rotate speed required by the indoor fan and the target temperature required by the heat exchanger are calculated, the operating status of the temperature conditioning apparatus may be adjusted according to the target rotate speed of the indoor fan and the target temperature of the heat exchanger. For example, an air volume of the indoor fan may be adjusted according to the target rotate speed of the indoor fan, and a rotate speed of a compressor of the outdoor unit may be adjusted according to a temperature variation value of the heat exchanger, i.e. a difference value between the target temperature of the heat exchanger and the third temperature, thus ensuring the temperature conditioning apparatus operating at the optimal energy efficiency, thereby realizing an energy-saving operation.

Based on the temperature conditioning apparatus including a plurality of the indoor units and one outdoor unit, the adjustment for the temperature conditioning apparatus is performed as the following examples.

In an example of the present disclosure, the temperature conditioning apparatus includes a plurality of the indoor units and one outdoor unit. As shown in Figure 6, the above step S104 may include the following steps S601-S603.

At S601, an operating status of each indoor unit is adjusted according to a target operating parameter of each indoor unit of the temperature conditioning apparatus.

The operating status of each indoor unit may be the target rotate speed of the indoor fan.

In this example, the operating status of each indoor unit of the temperature conditioning apparatus may be adjusted according to the target rotate speed of individual indoor units. For example, a target air volume of each indoor fan may be determined according to the target rotate speed of individual indoor fans, and further the air volume of each indoor fan may be adjusted according to the target air volume of individual indoor fans, thus making the frequency of the indoor unit relatively stable, thereby avoiding the frequent start-stop.

At S602, an operating parameter of the outdoor unit is determined according to a plurality of the target operating parameters of the plurality of the indoor units respectively.

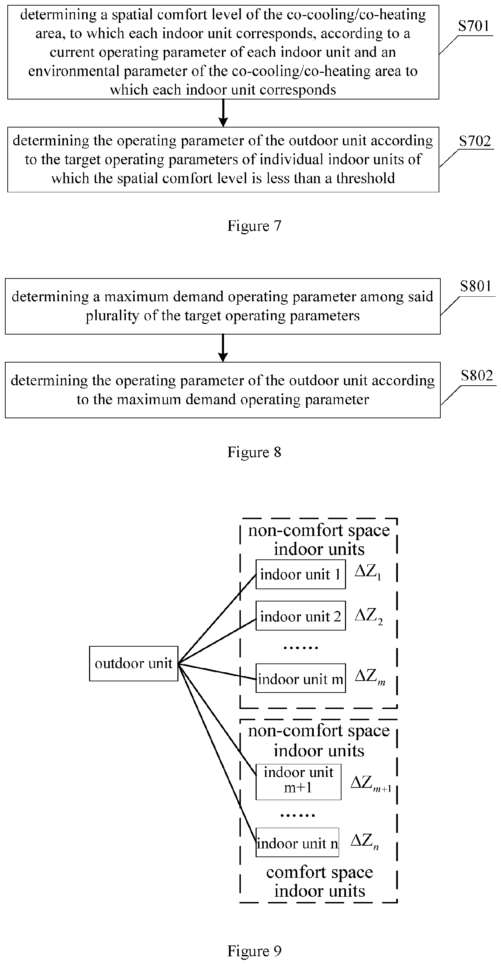

It should be noted that, when the operating parameter of the outdoor unit is determined according to the plurality of the target operating parameters of the plurality of the indoor units respectively, the operating parameter of the outdoor unit may be determined according to a spatial comfort level of the co-cooling/co-heating area; or may be determined according to the temperature of the heat exchanger. Illustrations will be made with reference to two examples as shown in Figure 7 and Figure 8 respectively.

In an example, as shown in Figure 7, the above step S602 may include the following steps S701-S702.

At S701, the spatial comfort level of the co-cooling/co-heating area, to which each indoor unit corresponds, is determined according to a current operating parameter of each indoor unit and an environmental parameter of the co-cooling/co-heating area to which each indoor unit corresponds.

The current operating parameter of the indoor unit includes a current air speed of the indoor unit, and the environmental parameter of the co-cooling/co-heating area may be any one or any combination of a temperature of the co-cooling/co-heating area, a humidity of the co-cooling/co-heating area, i.e. an indoor temperature and an indoor humidity respectively, a mean radiant temperature, an amount of clothes a user wears and a metabolic rate of the user.

The current air speed of the indoor unit may be converted through an air-outputting level of the air conditioner; and the temperature and humidity of the co-cooling/co-heating area may be directly detected with the sensors; the mean radiant temperature may be calculated with the indoor temperature and an outdoor temperature; the amount of clothes the user wears may be deduced based on the outdoor temperatures of the last 3 days; and the metabolic rate of the user may be distinguished by a building type, such as the metabolic rates of the user in office building, residence and school may be 1.2 met, and the metabolic rates of the user in shopping mall and laboratory may be 1.6 met, where met refers to metabolic equivalent.

Specifically, with determinations of the above values, the spatial comfort level of the co-cooling/co-heating area where each indoor unit is located, may be calculated according to equations of the comfort level which are as follows,

$$
\begin{aligned}
\text{PMV} = & \left(0.303\text{e}^{-0.036M} + 0.028\right)\{M - W - 3.05\times10^{-3}\times[5733 - 6.99\times\left(M-W\right)-P_a] \\
& -0.42\times[\left(M-W\right)-58.15]-1.72\times10^{-5}M\left(5867-P_a\right)-0.0014M\times\left(34-t_a\right) \\
& -3.96\times10^{-8}f_{cl}[\left(t_{cl}+273.15\right)^4 - \left(t_r+273.15\right)^4]-f_{cl}h_{cl}\left(t_{cl}-t_a\right)\}
\end{aligned} \qquad (4),
$$

wherein

$$
\begin{aligned}
t_{cl} = & \; 35.7 - 0.028\left(M-W\right)-I_{cl}\{3.96\times10^{-8}f_{cl}h_{cl}[\left(t_{cl}+273.15\right)^4 - \left(t_r+273.15\right)^4] \\
& + f_{cl}h_{cl}\left(t_{cl}-t_a\right)\}
\end{aligned} \qquad (5),
$$

$$
h_{cl} = \max\left(2.38\times\left(t_{cl}-t_a\right)^{0.25}, 12.1\times v_a^{0.5}\right) \qquad (6),
$$

$$
f_{cl} = \begin{cases} 1+1.29I_{cl} & I_{cl} < 0.078 \\ 1.05+0.645I_{cl} & I_{cl} \geq 0.078 \end{cases} \qquad (7).
$$

In the above equations, predicted mean vote (PMV) is an indicator for quantifying the (heat) comfort level; $M$ is a body energy metabolic rate; $W$ is a mechanical work done by the body; $P_a$ is a partial pressure of water vapor around the body; $t_a$ is an air temperature around the body; $t_r$ is the mean radiant temperature; $f_{cl}$ is a clothing area factor; $h_{cl}$ is a convective heat transfer factor; $t_{cl}$ is a temperature of an outer surface of a clothing; $I_{cl}$ is a clothing factor; and $v_a$ is the air speed of the indoor unit.

At S702, the operating parameter of the outdoor unit is determined according to the target operating parameters of individual indoor units of which the spatial comfort level is less than a threshold.

The threshold may be determined according to the building type, and different building types correspond to different thresholds of the comfort level. Alternatively, different areas the building locates may also correspond to different thresholds.

It should be noted that, the comfort level less than the threshold is an indicator that the comfort level does not meet a requirement and thus needs to be adjusted. Specifically, after the spatial comfort level of the co-cooling/co-heating area where each indoor unit is located is calculated, a comparison between each comfort level and the threshold in terms of numeric value may be performed to determine individual indoor units of which the comfort level is less than the threshold, and according to the target operating parameters of these individual indoor units, the operating parameter of the outdoor unit is determined.

In this example, a range of the threshold for the comfort level may be -0.5 - 0.5. For example, if the spatial comfort level of the indoor unit is not in the range of -0.5 - 0.5, the operating parameter of the outdoor unit will be determined according to the target operating parameters of the indoor unit. After that, an operating status of the outdoor unit is adjusted according to the operating parameter of the outdoor unit.

That is, as shown in Figure 9, all indoor units may be divided into comfort space indoor units and non-comfort space indoor units according to the threshold, where individual indoor units of which the comfort level is less than the threshold, i.e., an indoor unit 1, an indoor unit 2, ..., and an indoor unit m, form the non-comfort space indoor units; and individual indoor units of which the comfort level is equal to or higher than the threshold, i.e., an indoor unit m+1, ..., and an indoor unit n, form the comfort space indoor units. The temperature variation value of the heat exchanger of the indoor unit 1 is ΔZ1; the temperature variation value of the heat exchanger of the indoor unit 2 is ΔZ2; and the temperature variation value of the heat exchanger of the indoor unit m is ΔZm, and the operating parameter of the outdoor unit is determined according to ΔZ1, ΔZ2, ......, and ΔZm.

The operating parameter of the outdoor unit may include the rotate speed of the compressor of the outdoor unit. That is, according to ΔZ1, ΔZ2, ......, and ΔZm, the rotate speed of the compressor of the outdoor unit is determined, and according to the rotate speed, the compressor of the outdoor unit is adjusted.

In another example, as shown in Figure 8, the above step S602 may include the following steps S801-S802.

At S801, a maximum demand operating parameter among the plurality of the target operating parameters is determined.

The maximum demand operating parameter refers to the temperature variation value of the heat exchanger to which the indoor unit with a maximum demand energy among all of the indoor units corresponds, where the temperature variation value of the heat exchanger is the difference value ΔZ between the target temperature of the heat exchanger and the third temperature.

It would be understood that, during the determination of the demand energy of the indoor unit, it should be considered whether the temperature conditioning apparatus is under the heating state or under the cooling state, for improving the accuracy.

Accordingly, in this example, the above step S801 may include: based on the temperature conditioning apparatus operating under the cooling state, taking a minimum value min(ΔZn) among the plurality of the target operating parameters as the maximum demand operating parameter; based on the temperature conditioning apparatus operating under the heating state, taking a maximum value max(ΔZn) among the plurality of the target operating parameters as the maximum demand operating parameter.

That is, based on the temperature conditioning apparatus operating under the cooling state, the temperature variation value of the heat exchanger of the indoor unit 1 being ΔZ1, the temperature variation value of the heat exchanger of the indoor unit 2 being ΔZ2 and the temperature variation value of the heat exchanger of the indoor unit n being ΔZn, the minimum value among a plurality of the temperature variation values is taken as the maximum demand operating parameter, i.e., min(ΔZ1, ΔZ2, ......, ΔZn); based on the temperature conditioning apparatus operating under the heating state, the temperature variation value of the heat exchanger of the indoor unit 1 being ΔZ1, the temperature variation value of the heat exchanger of the indoor unit 2 being ΔZ2 and the temperature variation value of the heat exchanger of the indoor unit n being ΔZn, the maximum value among a plurality of the temperature variation values is taken as the maximum demand operating parameter, i.e., max(ΔZ1, ΔZ2, ......, ΔZn).

At S802, the operating parameter of the outdoor unit is determined according to the maximum demand operating parameter.

The operating parameter of the outdoor unit may include the rotate speed of the compressor of the outdoor unit. That is, according to the maximum demand operating parameter, the rotate speed of the compressor of the outdoor unit is determined, and according to the rotate speed, the compressor of the outdoor unit is adjusted.

At S603, the operating status of the outdoor unit is adjusted according to the operating parameter of the outdoor unit.

Thus, the rotate speed of the compressor of the outdoor unit is adjusted according to the spatial comfort level or the maximum demand operating parameter, thus making the temperature conditioning apparatus operate at the optimal energy efficiency point based on meeting the demand load, and greatly reducing the number of the start-stops of the system, thereby realizing a real energy-saving operation for the air conditioner.

The present disclosure further provides in examples a computer-readable storage medium having stored therein a computer program that, when executed by a processor, achieves a method for controlling a temperature conditioning apparatus as described above.

According to the computer-readable storage medium, when the computer program stored therein is executed by the processor, the computer program can adjust an operating status of the temperature conditioning apparatus according to a current demand load of a co-cooling/co-heating area and an operating parameter, realizing a detection for the demand load of the co-cooling/co-heating area, and a control for the temperature conditioning apparatus according to the detected demand load, thus reducing the number of start-stops of the temperature conditioning apparatus and avoiding a frequent start-stop, thereby making the temperature conditioning apparatus operate in energy saving.

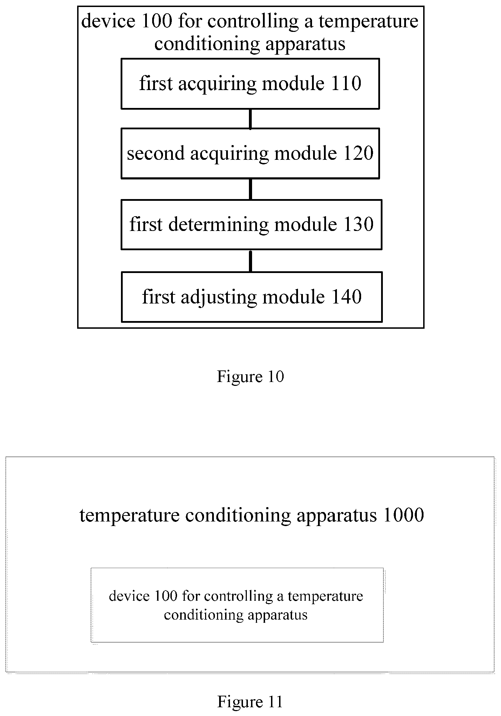

The present disclosure further provides in examples a device for controlling a temperature conditioning apparatus. Figure 10 is a block diagram showing a device for controlling a temperature conditioning apparatus according to examples of the present disclosure.

As shown in Figure 10, the device 100 for controlling a temperature conditioning apparatus includes a first acquiring module 110, a second acquiring module 120, a first determining module 130 and a first adjusting module 140.

The first acquiring module 110 is configured to acquire a current demand load of a co-cooling/co-heating area where the temperature conditioning apparatus is located; the second acquiring module 120 is configured to acquire a current operating parameter of the temperature conditioning apparatus; the first determining module 130 is configured to determine a target operating parameter of the temperature conditioning apparatus according to the current operating parameter and the current demand load; and the first adjusting module 140 is configured to adjust an operating status of the temperature conditioning apparatus according to the target operating parameter.

In an example, the first acquiring module 110 may include: a first determining unit, configured to determine a current predicted temperature according to a previous moment's demand load and a previous moment's predicted temperature of the co-cooling/co-heating area; a first acquiring unit, configured to acquire a current first actual temperature of the co-cooling/co-heating area and a current set temperature of the temperature conditioning apparatus; and a second determining unit, configured to determine a temperature corresponding to the current demand load according to the current predicted temperature, the first actual temperature and the current set temperature.

In an example, the device 100 for controlling a temperature conditioning apparatus may further include: a third acquiring module, configured to acquire a second actual temperature of the co-cooling/co-heating area at a startup moment of the temperature conditioning apparatus; and a second determining module, configured to determine a predicted temperature and a temperature corresponding to a demand load, at the startup moment of the temperature conditioning apparatus, of the co-cooling/co-heating area, according to the second actual temperature.

In an example, the first determining module 130 may include: a third determining unit, configured to determine a current output energy of the temperature conditioning apparatus according to the current operating parameter; and a fourth determining unit, configured to determine the target operating parameter of the temperature conditioning apparatus according to a matched-degree between the current output energy and the current demand load.

In an example, the fourth determining unit is specifically configured to: determine a current third actual temperature of a heat exchanger and a current first rotate speed of an indoor fan of the temperature conditioning apparatus; and determine a target rotate speed of the indoor fan and a target temperature of the heat exchanger of the temperature conditioning apparatus, according to the third actual temperature, the first rotate speed, the first actual temperature, the current demand load and a pre-set temperature variation coefficient.

In an example, the temperature conditioning apparatus comprises a plurality of indoor units and one outdoor unit, and the first adjusting module 140 may include: a first adjusting unit, configured to adjust an operating status of each indoor unit according to a target operating parameter of each indoor unit of the temperature conditioning apparatus; a fifth determining unit, configured to determine an operating parameter of the outdoor unit according to a plurality of the target operating parameters of said plurality of indoor units respectively; and a second adjusting unit, configured to adjust an operating status of the outdoor unit according to the operating parameter of the outdoor unit.

In an example, the fifth determining unit is specifically configured to: determine a spatial comfort level of the co-cooling/co-heating area, to which each indoor unit corresponds, according to a current operating parameter of each indoor unit and an environmental parameter of the co-cooling/co-heating area to which each indoor unit corresponds; and determine the operating parameter of the outdoor unit according to the target operating parameters of individual indoor units of which the spatial comfort level is less than a threshold.

In an example, the fifth determining unit is specifically configured to: determine a maximum demand operating parameter among said plurality of the target operating parameters; and determine the operating parameter of the outdoor unit according to the maximum demand operating parameter.

In an example, the fifth determining unit is specifically configured to: based on the temperature conditioning apparatus operating under a cooling state, take a minimum value among said plurality of the target operating parameters as the maximum demand operating parameter; and based on the temperature conditioning apparatus operating under a heating state, take a maximum value among said plurality of the target operating parameters as the maximum demand operating parameter.

It should be noted that, other detailed descriptions of the device for controlling a temperature conditioning apparatus may refer to the detailed descriptions of the method for controlling a temperature conditioning apparatus as described in the above examples, which are not repeated here for conciseness.

The device for controlling a temperature conditioning apparatus provided in examples of the present disclosure, adjusts an operating status of the temperature conditioning apparatus according to a current demand load of a co-cooling/co-heating area and an operating parameter, realizing a detection for the demand load of the co-cooling/co-heating area, and a control for the temperature conditioning apparatus according to the detected demand load, thus reducing the number of start-stops of the temperature conditioning apparatus and avoiding a frequent start-stop, thereby making the temperature conditioning apparatus operate in energy saving.

Figure 11 is a block diagram showing a temperature conditioning apparatus according to examples of the present disclosure. As shown in Figure 11, the temperature conditioning apparatus 1000 includes the device for controlling a temperature conditioning apparatus as described in the above examples.

The temperature conditioning apparatus provided in examples of the present disclosure, through the device for controlling the temperature conditioning apparatus in examples of the present disclosure, adjusts an operating status of the temperature conditioning apparatus according to a current demand load of a co-cooling/co-heating area and an operating parameter, realizing a detection for the demand load of the co-cooling/co-heating area, and a control for the temperature conditioning apparatus according to the detected demand load, thus reducing the number of start-stops of the temperature conditioning apparatus and avoiding a frequent start-stop, thereby making the temperature conditioning apparatus operate in energy saving.

Reference throughout this specification to "an embodiment", "some embodiments", "an example", "a specific example" or "some examples" means that a particular feature, structure, material, or characteristic described in connection with the embodiment or example is included in at least one embodiment or example of the present disclosure. Thus, the appearances of the phrases such as "in some embodiments", "in one embodiment", "in an embodiment", "in another example", "in an example", "in a specific example" or "in some examples", in various places throughout this specification are not necessarily referring to the same embodiment or example of the present disclosure. Furthermore, the particular features, structures, materials, or characteristics may be combined in any suitable manner in one or more embodiments or examples. In addition, those skilled in the art can combine different embodiments or examples and features in different embodiments or examples without contradicting each other.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this features. In the description of the present disclosure, "a plurality of" means two or more than two this features, unless specified otherwise.

Any procedure or method described in the flow charts or described in any other way herein may be understood to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions. This should be understood by those skilled in the art to which embodiments of the present disclosure belong.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc. Although explanatory embodiments have been shown and described, it would be appreciated by those skilled in the art that the above embodiments cannot be construed to limit the present disclosure, and changes, alternatives, and modifications can be made in the embodiments in the scope of the present disclosure.

Although explanatory embodiments have been shown and described, it would be appreciated by those skilled in the art that the above embodiments cannot be construed to limit the present disclosure, and changes, alternatives, and modifications can be made in the embodiments in the scope of the present disclosure.

**Claims**

1.   A method for controlling a temperature conditioning apparatus, comprising:

   acquiring a current demand load of a co-cooling/co-heating area where the temperature conditioning apparatus is located;
   acquiring a current operating parameter of the temperature conditioning apparatus;
   determining a target operating parameter of the temperature conditioning apparatus according to the current operating parameter and the current demand load; and
   adjusting an operating status of the temperature conditioning apparatus according to the target operating parameter.

2.   The method according to claim 1, wherein acquiring a current demand load of a co-cooling/co-heating area where the temperature conditioning apparatus is located comprises:

   determining a current predicted temperature according to a previous moment's demand load and a previous moment's predicted temperature of the co-cooling/co-heating area;
   acquiring a current first actual temperature of the co-cooling/co-heating area and a current set temperature of the temperature conditioning apparatus; and
   determining a temperature corresponding to the current demand load according to the current predicted temperature, the first actual temperature and the current set temperature.

3.   The method according to claim 2, further comprising:

   acquiring a second actual temperature of the co-cooling/co-heating area at a startup moment of the temperature conditioning apparatus; and
   determining a predicted temperature and a temperature corresponding to a demand load, at the startup moment of the temperature conditioning apparatus, of the co-cooling/co-heating area, according to the second actual temperature.

4.   The method according to claim 2, wherein determining a target operating parameter of the temperature conditioning apparatus according to the current operating parameter and the current demand load comprises:

   determining a current output energy of the temperature conditioning apparatus according to the current operating parameter; and
   determining the target operating parameter of the temperature conditioning apparatus according to a matched-degree between the current output energy and the current demand load.

5.   The method according to claim 4, wherein determining the target operating parameter of the temperature conditioning apparatus according to a matched-degree between the current output energy and the current demand load comprises:

   determining a current third actual temperature of a heat exchanger and a current first rotate speed of an indoor fan of the temperature conditioning apparatus; and
   determining a target rotate speed of the indoor fan and a target temperature of the heat exchanger of the temperature conditioning apparatus, according to the third actual temperature, the first rotate speed, the first actual temperature, the current demand load and a pre-set temperature variation coefficient.

6.   The method according to any one of claims 1 to 5, wherein the temperature conditioning apparatus comprises a plurality of indoor units and one outdoor unit, and adjusting an operating status of the temperature conditioning apparatus according to the target operating parameter comprises:

   adjusting an operating status of each indoor unit according to a target operating parameter of each indoor unit of the temperature conditioning apparatus;
determining an operating parameter of the outdoor unit according to a plurality of the target operating parameters of said plurality of indoor units respectively; and
adjusting an operating status of the outdoor unit according to the operating parameter of the outdoor unit.

**7.** The method according to claim 6, wherein determining an operating parameter of the outdoor unit according to a plurality of the target operating parameters of said plurality of indoor units respectively comprises:

determining a spatial comfort level of the co-cooling/co-heating area, to which each indoor unit corresponds, according to a current operating parameter of each indoor unit and an environmental parameter of the co-cooling/co-heating area to which each indoor unit corresponds; and
determining the operating parameter of the outdoor unit according to the target operating parameters of individual indoor units of which the spatial comfort level is less than a threshold.

**8.** The method according to claim 6, wherein determining an operating parameter of the outdoor unit according to a plurality of the target operating parameters of said plurality of indoor units respectively comprises:

determining a maximum demand operating parameter among said plurality of the target operating parameters; and
determining the operating parameter of the outdoor unit according to the maximum demand operating parameter.

**9.** The method according to claim 8, wherein determining a maximum demand operating parameter among said plurality of the target operating parameters comprises:

based on the temperature conditioning apparatus operating under a cooling state, taking a minimum value among said plurality of the target operating parameters as the maximum demand operating parameter; and
based on the temperature conditioning apparatus operating under a heating state, taking a maximum value among said plurality of the target operating parameters as the maximum demand operating parameter.

**10.** A device for controlling a temperature conditioning apparatus, comprising:

a first acquiring module, configured to acquire a current demand load of a co-cooling/co-heating area where the temperature conditioning apparatus is located;
a second acquiring module, configured to acquire a current operating parameter of the temperature conditioning apparatus;
a first determining module, configured to determine a target operating parameter of the temperature conditioning apparatus according to the current operating parameter and the current demand load; and
a first adjusting module, configured to adjust an operating status of the temperature conditioning apparatus according to the target operating parameter.

**11.** The device according to claim 10, wherein the first acquiring module comprises:

a first determining unit, configured to determine a current predicted temperature according to a previous moment's demand load and a previous moment's predicted temperature of the co-cooling/co-heating area;
a first acquiring unit, configured to acquire a current first actual temperature of the co-cooling/co-heating area and a current set temperature of the temperature conditioning apparatus; and
a second determining unit, configured to determine a temperature corresponding to the current demand load according to the current predicted temperature, the first actual temperature and the current set temperature.

**12.** The device according to claim 11, further comprising:

a third acquiring module, configured to acquire a second actual temperature of the co-cooling/co-heating area at a startup moment of the temperature conditioning apparatus; and
a second determining module, configured to determine a predicted temperature and a temperature corresponding to a demand load, at the startup moment of the temperature conditioning apparatus, of the co-cooling/co-heating area, according to the second actual temperature.

**13.** The device according to claim 11, wherein the first determining module comprises:

a third determining unit, configured to determine a current output energy of the temperature conditioning apparatus according to the current operating parameter; and

a fourth determining unit, configured to determine the target operating parameter of the temperature conditioning apparatus according to a matched-degree between the current output energy and the current demand load.

14. The device according to claim 13, wherein the fourth determining unit is specifically configured to:

determine a current third actual temperature of a heat exchanger and a current first rotate speed of an indoor fan of the temperature conditioning apparatus; and

determine a target rotate speed of the indoor fan and a target temperature of the heat exchanger of the temperature conditioning apparatus, according to the third actual temperature, the first rotate speed, the first actual temperature, the current demand load and a pre-set temperature variation coefficient.

15. The device according to any one of claims 10 to 14, wherein the temperature conditioning apparatus comprises a plurality of indoor units and one outdoor unit, and the first adjusting module comprises:

a first adjusting unit, configured to adjust an operating status of each indoor unit according to a target operating parameter of each indoor unit of the temperature conditioning apparatus;

a fifth determining unit, configured to determine an operating parameter of the outdoor unit according to a plurality of the target operating parameters of said plurality of indoor units respectively; and

a second adjusting unit, configured to adjust an operating status of the outdoor unit according to the operating parameter of the outdoor unit.

16. The device according to claim 15, wherein the fifth determining unit is specifically configured to:

determine a spatial comfort level of the co-cooling/co-heating area, to which each indoor unit corresponds, according to a current operating parameter of each indoor unit and an environmental parameter of the co-cooling/co-heating area to which each indoor unit corresponds; and

determine the operating parameter of the outdoor unit according to the target operating parameters of individual indoor units of which the spatial comfort level is less than a threshold.

17. The device according to claim 15, wherein the fifth determining unit is specifically configured to:

determine a maximum demand operating parameter among said plurality of the target operating parameters; and

determine the operating parameter of the outdoor unit according to the maximum demand operating parameter.

18. The device according to claim 17, wherein the fifth determining unit is specifically configured to:

based on the temperature conditioning apparatus operating under a cooling state, take a minimum value among said plurality of the target operating parameters as the maximum demand operating parameter; and

based on the temperature conditioning apparatus operating under a heating state, take a maximum value among said plurality of the target operating parameters as the maximum demand operating parameter.

19. A computer-readable storage medium having stored therein a computer program that, when executed by a processor, achieves a method for controlling a temperature conditioning apparatus according to any one of claims 1 to 9.

20. A temperature conditioning apparatus, comprising a device for controlling a temperature conditioning apparatus according to any one of claims 10 to 18.

acquiring a current demand load of a co-cooling/co-heating area where the temperature conditioning apparatus is located ⟶ S101

↓

acquiring a current operating parameter of the temperature conditioning apparatus ⟶ S102

↓

determining a target operating parameter of the temperature conditioning apparatus according to the current operating parameter and the current demand load ⟶ S103

↓

adjusting an operating status of the temperature conditioning apparatus according to the target operating parameter ⟶ S104

Figure 1

determining a current predicted temperature according to a previous moment's demand load and a previous moment's predicted temperature of the co-cooling/co-heating area ⟶ S201

↓

acquiring a current first actual temperature of the co-cooling/co-heating area and a current set temperature of the temperature conditioning apparatus ⟶ S202

↓

determining a temperature corresponding to the current demand load according to the current predicted temperature, the first actual temperature and the current set temperature ⟶ S203

Figure 2

acquiring a second actual temperature of the co-cooling/co-heating area at a startup moment of the temperature conditioning apparatus ⟶ S301

↓

determining a predicted temperature and a temperature corresponding to a demand load, at the startup moment of the temperature conditioning apparatus, of the co-cooling/co-heating area, according to the second actual temperature ⟶ S302

Figure 3

determining a current output energy of the temperature conditioning apparatus according to the current operating parameter · S401

determining the target operating parameter of the temperature conditioning apparatus according to a matched-degree between the current output energy and the current demand load · S402

Figure 4

determining a current third actual temperature of a heat exchanger and a current first rotate speed of an indoor fan of the temperature conditioning apparatus · S501

determining a target rotate speed of the indoor fan and a target temperature of the heat exchanger of the temperature conditioning apparatus, according to the third actual temperature, the first rotate speed, the first actual temperature, the current demand load and a pre-set temperature variation coefficient · S502

Figure 5

adjusting an operating status of each indoor unit according to a target operating parameter of each indoor unit of the temperature conditioning apparatus · S601

determining an operating parameter of the outdoor unit according to a plurality of the target operating parameters of said plurality of indoor units respectively · S602

adjusting an operating status of the outdoor unit according to the operating parameter of the outdoor unit · S603

Figure 6

determining a spatial comfort level of the co-cooling/co-heating area, to which each indoor unit corresponds, according to a current operating parameter of each indoor unit and an environmental parameter of the co-cooling/co-heating area to which each indoor unit corresponds

S701

determining the operating parameter of the outdoor unit according to the target operating parameters of individual indoor units of which the spatial comfort level is less than a threshold

S702

Figure 7

determining a maximum demand operating parameter among said plurality of the target operating parameters

S801

determining the operating parameter of the outdoor unit according to the maximum demand operating parameter

S802

Figure 8

non-comfort space indoor units

| indoor unit 1 | $\Delta Z_1$ |

| indoor unit 2 | $\Delta Z_2$ |

......

| indoor unit m | $\Delta Z_m$ |

outdoor unit

non-comfort space indoor units

| indoor unit m+1 | $\Delta Z_{m+1}$ |

......

| indoor unit n | $\Delta Z_n$ |

comfort space indoor units

Figure 9

device 100 for controlling a temperature conditioning apparatus

first acquiring module 110

second acquiring module 120

first determining module 130

first adjusting module 140

Figure 10

temperature conditioning apparatus 1000

device 100 for controlling a temperature conditioning apparatus

Figure 11

## INTERNATIONAL SEARCH REPORT

International application No.

**PCT/CN2021/122364**

### A. CLASSIFICATION OF SUBJECT MATTER

F24F 11/46(2018.01)i; F24F 11/64(2018.01)i; F24F 11/77(2018.01)i; F24F 11/80(2018.01)i; F24F 11/88(2018.01)i; F24F 11/30(2018.01)i; F24F 11/65(2018.01)i; F24F 11/74(2018.01)i; F24F 11/83(2018.01)i; F24F 110/10(2018.01)n

According to International Patent Classification (IPC) or to both national classification and IPC

### B. FIELDS SEARCHED

Minimum documentation searched (classification system followed by classification symbols)

F24F

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; ISI_Web of Science: 美的, 空调, 空气调节, 需求, 负荷, 负载, 参数, 温度, 目标, 调节, 调整, 启停, 频繁, MIDEA, air condition, require, load, parameter, temperature, target, adjust, turn on, turn off, often, frequently

### C. DOCUMENTS CONSIDERED TO BE RELEVANT

| Category* | Citation of document, with indication, where appropriate, of the relevant passages | Relevant to claim No. |
|---|---|---|
| X | CN 107062515 A (QINGDAO HAIER AIR CONDITIONER ELECTRIC CO., LTD.) 18 August 2017 (2017-08-18) description, paragraphs [0010]-[0021] and figure 1 | 1-20 |
| X | CN 107192097 A (GREE ELECTRIC APPLIANCES, INC. OF ZHUHAI) 22 September 2017 (2017-09-22) description, paragraphs [0010]-[0087] and figures 1-9 | 1-20 |
| A | CN 109190799 A (GUANGDONG POWER GRID CO., LTD.; GPGC ELECTRIC POWER RESEARCH INSTITUTE) 11 January 2019 (2019-01-11) entire document | 1-20 |
| A | CN 104567162 A (GREE ELECTRIC APPLIANCES, INC. OF ZHUHAI) 29 April 2015 (2015-04-29) entire document | 1-20 |
| A | CN 109764586 A (GREE ELECTRIC APPLIANCES, INC. OF ZHUHAI) 17 May 2019 (2019-05-17) entire document | 1-20 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 November 2021** | **13 December 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/122364**

| Patent document cited in search report | | | Publication date (day/month/year) | Patent family member(s) | | | Publication date (day/month/year) |
|---|---|---|---|---|---|---|---|
| CN | 107062515 | A | 18 August 2017 | None | | | |
| CN | 107192097 | A | 22 September 2017 | None | | | |
| CN | 109190799 | A | 11 January 2019 | CN | 109190799 | B | 26 January 2021 |
| CN | 104567162 | A | 29 April 2015 | CN | 104567162 | B | 11 January 2017 |
| CN | 109764586 | A | 17 May 2019 | CN | 109764586 | B | 28 April 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011445825

- CN 202011443905